# EUROPEAN PATENT APPLICATION

(11) **EP 1 420 241 A1**
(43) Date of publication of application: **19.05.2004**
(21) Application number: 02749339.4
(22) Date of filing: 23.07.2002
(51) Int. Cl.: G01N 3/12, B60R 21/26

(54) **PRESSURE RESISTANCE EVALUATION METHOD**

(30) Priority: 25.07.2001 JP 2001223798
(71) Applicant: Daicel Chemical Industries, Ltd., Osaka 590-8501 (JP)
(72) Inventor: NAKAYASU, Masayuki, Himeji-shi, Hyogo 672-8079 (JP); KATSUDA, Nobuyuki, Himeji-shi, Hyogo 671-1146 (JP)
(74) Representative: Grünecker, Kinkeldey, Stockmair & Schwanhäusser Anwaltssozietät
(86) International application number: PCT/JP2002/007438
(87) International publication number: WO 2003/010514

(57) **Abstract**

The present invention provides a test method of hydrostatic pressure of an inflator housing which can evaluate a hydrostatic pressure conveniently.

A test method of hydrostatic pressure of an inflator housing constituting an outer shell container for various inflators comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water and the step of drying the interior of the inflator housing.

## Description

### Technical Field to which the Invention belongs

The present invention relates to a test method of hydrostatic pressure of various kinds of inflators in which a pressurized medium such as an inert gas is charged in a high pressure for use, and a method for manufacturing the various kinds of inflators.

### Prior Art

In an air bag apparatus mounted to an automobile or the like, an inflator in which an air bag is inflated utilizing an inert gas charged in a high pressure or the like is incorporated. In an inflator of this type, an inert gas such as argon, helium is charged in a high pressure into an inflator housing constituting an outer shell container. Therefore, it is obliged to conduct a test method of hydrostatic pressure on all products and confirm their safety by the law (High Pressure Gas Safety Law) because the safety of a passenger must be secured against an eventuality.

In this test method of hydrostatic pressure, it is required to apply a pressure of 1.5 times the internal pressure in an actual product to evaluate the safety thereof. When the charging pressure is 50 to 60 MPa, the hydrostatic pressure in the test is required to be under the high pressure of 75 to 90 MPa. Conventionally, as a method for such a test method of hydrostatic pressure, a method comprising the steps of charging gas into an inflator housing and pressurizing the same, or a method comprising the steps of injecting oil with a high viscosity into an inflator housing and pressurizing the same is employed.

However, in case of the test of charging a gas in a high pressure, a device for charging in a high pressure is very expensive, and also, if there is a defect such as bad welding, an inflator housing may be broken violently due to a gas leakage so that a worker may get injured.

Also, in case of the test of injecting an oil with a high viscosity, although the safety at a time of the test is high, it is difficult to clean and dry the inside of the inflator housing after the oil is removed, a gas for inflating an air bag is polluted by the remaining oil, and the remaining oil may adversely affect a welded portion.

Further, it is preferable that the test method of hydrostatic pressure is not performed independently of manufacturing an inflator but it is incorporated in a manufacturing procedure of an inflator. In that case, therefore, it is also required that a smooth flow in a manufacturing procedure is not obstructed in view of the whole manufacturing procedure.

### Disclosure of the Invention

An object of the present invention is to provide a test method of hydrostatic pressure for confirming the safety of an inflator and a method for manufacturing an inflator in which the test method of hydrostatic pressure is incorporated in a manufacturing procedure.

The present invention provides, as a means for solving the above-described problem, a test method of hydrostatic pressure of an inflator housing constituting an outer shell container for various inflators, comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing.

Further, the present invention provides, as a means for solving the above-described problem, a test method of hydrostatic pressure of an inflator housing constituting an outer shell container for various inflators, comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water.

Further, the present invention provides, still another means for solving the above-described problem, the present invention provides, as a means for solving the above-described problem, a test method of hydrostatic pressure of an inflator housing constituting an outer shell container for various inflators, comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water and the step of drying the interior of the inflator housing.

An application range of the test method of hydrostatic pressure of the present invention is different between a case such that an inflator housing subjected to a hydrostatic pressure evaluation is not used as a product and a case that it is used as a product. That is, in the case of not using the inflator housing as a product, only the steps of injecting water and holding the water is well enough. Alternatively, in view of re-use, the step of draining water may be added to the above. However, in case of using the inflator housing as a product, it is necessary to dry the interior of the inflator housing in the end, the drying step is further added to the above.

Further, the present invention provides, as still another means for solving the above-described problem, a method for manufacturing an inflator in which a pressurized medium is charged into an inflating housing in a high pressure, comprising, as a manufacturing process, comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water and the step of drying the interior of the inflator housing.

The test method of hydrostatic pressure and the method for manufacturing an inflator according to the present invention can be applied to an inflator in which a pressurized medium including nitrogen gas, oxygen gas and an inert gas such as argon, helium, and neon is charged in a high pressure. Specifically, the present invention can be applied to various inflators such as an air bag inflator for a driver side, an air bag inflator for a passenger side, an air bag inflator for a side collision, an inflator for a curtain air bag, an inflator for a knee-bolster, an inflator for an inflatable seat belt, an inflator for a tubular system, an inflator for a pretensioner.

When the test method of hydrostatic pressure and the method for manufacturing an inflator in which the test method of hydrostatic pressure is incorporated in a manufacturing process according to the present invention are applied, the problem occurring when gas or oil is used as the test method of hydrostatic pressure can be solved.

### Brief Description of the Drawing

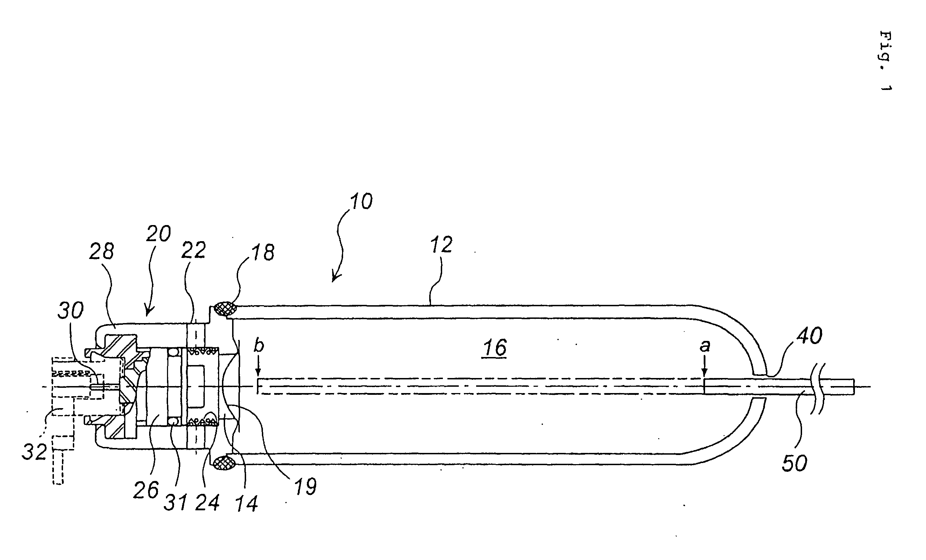

Fig. 1 is an explanatory view of a test method of hydrostatic pressure of an inflator housing according to the present invention.

### Description of Reference Numerals

10 inflator
12 inflator housing
40 thin hole
50 thin pipe

### Preferred Embodiment of the Invention

A test method of hydrostatic pressure of an inflator housing of the present invention will be explained with reference to the drawing. Fig. 1 is a sectional view in the longitudinal direction of an inflator for a curtain air bag 10 or an air bag inflator for a side collision 10 (hereinafter, referred to as "an inflator 10") in which a pressurized medium is charged in a high pressure.

First, the inflator 10 which is a finished product after the hydrostatic pressure evaluation will be explained. An inflator housing 12 has an opening portion 14 at its one end, it is closed at the other end, and a pressurized medium comprising an inert gas is charged in an inner space 16 in the pressure of about 60 MPa. The inflator housing 12 has a circular cross-section in a widthwise direction, and the opening port 14 is also circular.

The inflator housing 12 is nearly closed by swaging or spinning, without closing a thin hole 40 which is a charging hole for a pressurized medium and is provided at one end of the inflator housing. After a diffuser portion 20 is connected to the inflator housing 12, an unillustrated seal pin having the same diameter as that of the thin hole 40 is fitted into the thin hole 40. Then, the pressurized medium is charged from a gap between the thin hole 40 and the seal pin, and the inflator housing 12 is welded at a portion of the seal pin to be completely closed.

The diffuser portion 20 is fixed at a connecting portion 18 in the opening portion 14 side of the inflator housing 12 by welding. The diffuser portion 20 has an outer shell formed by a diffuser housing 28, it has a plurality of gas discharging ports 22 for discharging outside the pressurized medium flowing from the opening portion 14 at actuation, and it is further provided with a filter 24 made of wire mesh to cover the plurality of discharge ports from the inside thereof. Thereby, the pressurized medium is always discharged outside from the gas discharging ports 22 via the filter 24.

The opening portion 14 of the inflator housing 12 is closed by a rupturable plate 19 mounted to the diffuser portion 20, and before actuation, an inner space 16 of the inflator housing 12 is maintained heretically in a high pressure. Meanwhile, the gas discharging ports 22 are not closed and fluid-communicating with the outside.

An igniter 26 containing a igniting charge to serve as a rupturing means for the rupturable plate 19 is provided in the diffuser portion 20. This igniter 26 is fixed into the diffuser housing 28 and mounted to the diffuser portion 20, and it is fixed by crimping an end portion 29 of the diffuser housing 28. Reference numeral 30 is a conductive pin for electrifying the igniter 26, reference numeral 31 is an O-ring, and reference numeral 32 represented by a broken line denotes a connector for connection to a power supply at the time of mounting a vehicle.

In a manufacturing process of such an inflator 10, generally, after the inflator housing 12 and the diffuser portion 20 are welded at the connecting portion 18, a test method of hydrostatic pressure is performed before mounting of the igniter 26.

First, water is injected from the thin hole 40 provided in the inflator housing 12 until the internal pressure of the inflator housing 12 reaches a predetermined pressure which is an evaluation standard (in case of this embodiment, about 60 MPa × 1.5 = about 90 MPa).

When water is injected, a straw-shaped thin pipe 50 made of stainless steel, aluminum or the like is inserted into the inflator housing 12 from the thin hole 40 and then, the injection is performed at the thin pipe 50. It is preferable that water used at this time is pure. Running water, ion-exchanged water or the like can be used.

Regarding the relationship between the diameter of the thin hole 40 and the thin pipe 50, when the diameter of the thin hole 40 is 3 mm, the thin pipe having an outer diameter of 1.5 to 2 mm can be used. Also, when water is injected, it is preferable that the thin pipe 50 is inserted until its tip end portion is positioned at the position indicated with "a" or so (at a position near the thin hole 40) and then, injection is performed.

After water is injected to reach the predetermined pressure, the thin pipe 50 is removed, and the inflator housing is maintained for one minute or so, being closed hermetically by resin or the like, and the hydrostatic pressure of the inflator housing 12 is evaluated. In this case, whether the internal pressure reaches the predetermined pressure has to be determined in advance from the volume of the inflator housing 12 and the injecting amount of water.

Also, the following method can be employed as another method. After water is injected in the above-described manner until the interior of the inflator housing 12 is filled with water, the injecting is once stopped and the thin pipe 50 is pulled out. Next, after the thin pipe 50 attached at its tip end with an elastic molded body having a through hole is pressed so that the through hole is positioned at the thin hole 40, injecting of water is restarted. And, after a pressure gauge additionally provided to the thin pipe 50 confirms that the predetermined pressure is obtained, the inflator housing 12 is maintained for one minute or so as it is.

Next, the water injected is drained out. At this time, it is preferable to drain the water from the thin pipe 50 or the thin hole 40 (a gap between the thin hole 40 and the thin pipe 50) after sealing is removed to insert the thin pipe 50 from the thin hole 40 again. In this case, a method comprising the steps of inserting the thin pipe 50 so that the tip end portion thereof reaches the position indicated with "b" or so (the position near to the rupturable plate 19) and draining the water from the thin pipe 50 mechanically, a method comprising the steps of charging gas from the thin pipe 50 in a pressure and draining the water from the thin hole 40, a method comprising the steps of charging gas from the thin hole 40 in a pressure and draining the water from the thin pipe 50 or the like can be employed.

Next, in preparation for the next charging step of a pressurized medium, the interior of the inflator housing 12 is dried by feeding gas therein. When gas is fed, it is preferable to feed an normal temperature gas, heated air or water vapor through the thin pipe 50 to conduct drying. Also, heating and drying may be conducted in an oven or the like, as necessary.

Thus, the hydrostatic pressure evaluation is performed in the manufacturing process of the inflator 10, and only inflator housings which are acceptable are transferred to the next-step. Consequently, assembling of other parts such as the igniter 26 is performed to obtain the inflator 10 which is a final product.

### Example

The present invention will be explained below in detail on the basis of an example, but the present invention is not limited to this example.

### Example 1

In the manufacturing process of the inflator 10 shown in Fig. 1, the hydrostatic pressure evaluation of the inflator housing 12 was conducted by the following method. Incidentally, the details of the inflator housing 12 shown in Fig. 1 are as follows:
The quality of the material for the inflator housing 12: iron-base alloy
The thickness of the inflator housing 12: 2 mm
The volume of the inflator housing: 100 ml
The outer diameter of the inflator housing: 30 mm
The diameter of the thin hole 40: 3 mm
The outer diameter of the thin pipe 50: 2 mm
The quality of material for the thin pipe 50: stainless

After the inflator housing 12 and the diffuser portion 20 was connected at the connecting portion 18 by a resistance-welding (or a projection welding, a laser welding), the thin pipe 50 was inserted into the thin hole 40 at a stage prior to mounting of the igniter 26 so that its tip end was positioned at the position indicated with "a".

Thereafter, running water was injected from the thin pipe 50, the injecting was stopped when the inflator housing was full, and running water was injected further in a state such that the thin pipe 50 attached at its tip end with a rubber-made circular elastic body (having a through hole of a hole diameter of 3 mm) was pressed to meet the through hole and the thin hole 40 with each other. And, when the pressure gauge additionally attached to the thin pipe 50 indicated about 90 MPa, the inflator housing was held for one minute while the pressure was maintained, and it was confirmed that the withstand pressure of the inflator housing 12 satisfied a level required by the Law.

Next, the seal was removed, the thin pipe 50 was inserted until the tip end thereof reached the position indicated with "b" this time, and the running water was drained mechanically by suction.

And then, after air with an normal temperature (20°C) was fed from the thin pipe 50 for about two minutes at a rate of about 1000 cm³/minute in a state such that the tip end was maintained in the position indicated as "b", the thin pipe 50 was pulled out and the inflator housing was further left in an oven having a temperature of 100°C for about 10 minutes as it was.

Thereafter, an inert gas was charged from the thin hole 40 until the predetermined pressure (60 MPa) was achieved and it was sealed. Finally, necessary parts such as the igniter 26, the connector 32 were attached to the inflator housing so that the inflator 10 was obtained.

## Claims

1. A test method of hydrostatic pressure of an inflator housing constituting an outer shell container for various inflators comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water.

2. A test method of hydrostatic pressure of an inflator housing constituting an outer shell container for various inflators comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water.

3. A test method of hydrostatic pressure of an inflator housing constituting an outer shell container for various inflators comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water and the step of drying the interior of the inflator housing.

4. The test method of hydrostatic pressure of an inflator housing according to any one of claims 1 to 3, wherein the step of injecting water is performed by inserting a thin pipe from the thin hole provided in the inflator housing to inject water via the thin pipe.

5. The test method of hydrostatic pressure of an inflator housing according to any one of claims 2 to 4, wherein the step of draining water is performed by inserting a thin pipe from the thin hole provided in the inflator housing to drain water from the thin pipe or the thin hole.

6. The test method of hydrostatic pressure of an inflator housing according to any one of claims 3 to 5, wherein the step of drying the interior of the inflator housing is performed by inserting a thin pipe from the thin hole provided in the inflator housing and feeding gas in the interior to dry the same.

7. The test method of hydrostatic pressure of an inflator housing according to any one of claims 3 to 6, wherein the gas fed in the interior is normal temperature air, heated air or water vapor.

8. A method for manufacturing an inflator in which a pressurized medium is charged into an inflating housing in a high pressure, comprising, as a manufacturing process, comprising the steps of injecting water from a thin hole provided in the inflator housing until the pressure inside the inflator housing reaches a predetermined pressure of an evaluation standard, keeping the inflator housing sealed tightly, or comprising the step of increasing the pressure inside the inflator housing to the predetermined pressure while injecting water in the inflator housing, and further comprising the step of draining the injected water and the step of drying the interior of the inflator housing.

9. A method for manufacturing an inflator according to claim 8, where the step of injecting and keeping water comprises a step of inserting a thin pipe from a thin hole provided in the inflator housing to inject water via the hole pipe, the step of draining the injected water comprises a step of inserting the thin pipe in the thin hole to drain water from the thin pipe or the thin hole, and the step of drying the interior of the inflator housing comprises a step of feeding gas into the interior from the thin pipe to dry the interior.

10. A method for manufacturing an inflator according to claim 9, wherein the gas fed into the interior is normal temperature air, heated air or water vapor.
